# EUROPÄISCHE PATENTSCHRIFT

(11) **EP 1 227 963 B1**
(45) Veröffentlichungstag und Bekanntmachung des Hinweises auf die Patenterteilung: **01.06.2005**
(21) Anmeldenummer: 00988570.8
(22) Anmeldetag: 07.11.2000
(51) Int. Cl.: B62B 5/02, B62B 5/04, B62B 3/14

(54) **GEPÄCKTRANSPORTWAGEN**
BAGGAGE TRANSPORT CART
CHARIOT DE TRANSPORT DE BAGAGES

(30) Priorität: 10.11.1999 DE 29919764 U
(43) Veröffentlichungstag der Anmeldung: 07.08.2002
(73) Patentinhaber: WANZL METALLWARENFABRIK GMBH, D-89336 Leipheim (DE)
(72) Erfinder: HEINISCH, Klaus, 86513 Ursberg (DE); SCHMID, Johann, 87757 Derndorf (DE)
(86) Internationale Anmeldenummer: PCT/DE2000/003924
(87) Internationale Veröffentlichungsnummer: WO 2001/034449

(56) Entgegenhaltungen:
- EP-B- 0 052 528
- EP-B- 0 373 398
- DE-U- 8 534 959

## Beschreibung

Die Erfindung betrifft einen Gepäcktransportwagen, der auf einer Rolltreppe beförderbar ist, mit einem Fahrgestell, das nahe seiner vorne angeordneten, um eine senkrechte Schwenkachse bewegbaren Lenkrolle und nahe seiner beiden hinteren Räder mit Abstützeinrichtungen ausgestattet ist, die zur Abstützung des Wagens auf dem geneigten Abschnitt der Rolltreppe bestimmt sind, mit einer für das Abstellen von Handgepäck vorgesehenen Abstelleinrichtung, die eine in Schieberichtung des Wagens ansteigende Ladefläche aufweist, die von einer nach oben gerichteten vorderen Anschlagvorrichtung und von einer nach oben gerichteten hinteren Anschlagvorrichtung begrenzt ist und mit einer Schiebeeinrichtung, die zum Führen des Wagens dient.

Das deutsche Gebrauchsmuster G 85 34 959.3 beschreibt einen derartigen Gepäcktransportwagen, jedoch sind dessen Abstützeinrichtungen im wesentlichen durch an den unteren Längsseiten des Fahrgestelles befindliche Zahnleisten gebildet.
Eine Weiterentwicklung dieses Gepäcktransportwagens ist z.B. am Flughafen Frankfurt im Einsatz. Bei diesen Gepäcktransportwagen sind die Abstützeinrichtungen nahe der vorderen Lenkrolle und nahe der hinteren Räder ortsfest am Fahrgestell angeordnet.
Beide Transportwagenarten sind so konzipiert, dass sie imstande sind, auch großes Gepäck wie Koffer aller Größen sowie große Reisetaschen aufzunehmen. Entsprechend sind diese Gepäcktransportwagen lang gestaltet und beanspruchen als Auflage am geneigten Abschnitt einer Rolltreppe entweder drei Trittstufen oder zwei Trittstufen wobei in diesem Falle eine Trittstufe unbeansprucht dazwischen liegt.

Es ist angeregt worden, einen kleinen Gepäcktransportwagen zu entwikkeln, der nur zum Transport von Handgepäck wie Taschen, kleinen Koffern oder z.B. auch von Pilotenkoffern geeignet ist. Der zu entwickelnde Gepäcktransportwagen soll am geneigten Abschnitt einer Rolltreppe nur auf zwei Trittstufen abstützbar sein, ohne dass eine Trittstufe unbenutzt dazwischen liegt. Er soll bei Auf- und Abwärtsfahrt nicht kippen und er soll beim Einfahren in eine Rolltreppe bereits bei Auffahrt auf die erste Trittstufe eine sichere Position einnehmen.

Als Lösung dieser Anregung wird vorgeschlagen, dass der Abstand der vorderen Anschlagvorrichtung zur hinteren Anschlagvorrichtung kleiner ist als der Abstand zwischen der Schwenkachse der Lenkrolle und der hinteren Anschlagvorrichtung, dass die vordere Lenkrolle als auf der Rolltreppe selbsttätig wirkende Bremsrolle gestaltet ist, dass der Abstand zwischen der Schwenkachse der Lenkrolle und der gemeinsamen horizontalen Radachse der hinteren Räder mindestens 480 mm und höchstens 560 mm beträgt und dass die Spurweite der hinteren Räder mit mindestens 480 mm festgelegt ist.

Die Lösung lässt einen kleinen, zweckmäßigen Gepäcktransportwagen entstehen, der sich beladen oder unbeladen sicher auf einer Rolltreppe transportieren lässt. Zu dieser Sicherheit tragen zumindest zwei technische Merkmale entscheidend bei. Das erste Merkmal besteht darin, dass die Schwenkachse der Lenkrolle vor der vorderen Anschlagvorrichtung angeordnet ist. Dadurch wird das Abstürzen des Gepäcktransportwagens bei Abwärtsfahrt auf der Rolltreppe vermieden. Das zweite wichtige Merkmal ist darin erkennbar, dass die Lenkrolle als eine auf der Rolltreppe selbsttätig wirkende Bremsrolle gestaltet ist. Fährt man nämlich in die Rolltreppe ein, verrastet das Laufrad der Lenkrolle mit der ersten Trittstufe, so dass der Gepäcktransportwagen nicht über die erste Trittstufe hinaus weitergeschoben werden kann. Diese Tatsache trägt ebenfalls zum sicheren Transport des Gepäcktransportwagens auf einer Rolltreppe bei. Die übrigen zur Lösung beitragenden Merkmale dienen ebenfalls dazu, den Gepäcktransportwagen vor einem Abstürzen oder vor einem seitlichen Kippen zu bewahren.

Die Erfindung wird anhand eines Ausführungsbeispieles näher beschrieben. Schematisch gezeichnet zeigt
Fig. 1 den Gepäcktransportwagen in Seitenansicht sowie
Fig. 2 den gleichen Wagen in Schieberichtung betrachtet.

Der Gepäcktransportwagen 1 weist ein von oben betrachtet trapezförmiges Fahrgestell 2 auf. Im hinteren Bereich 3 des Fahrgestelles 2 erstrecken sich ausgehend vom Fahrgestell 2 zu beiden Seiten zwei Rohrpfosten 5, die an ihrem oberen Ende eine Schiebeeinrichtung 6 tragen. Im vorderen Bereich 4 des Fahrgestelles 2 ist eine um eine senkrechte Achse verschwenkbare Lenkrolle 7 angeordnet. Nachfolgend wird die senkrechte Achse als Schwenkachse 8 bezeichnet. Unterhalb der Rohrpfosten 5 befindet sich jeweils ein Rad, die beide nachfolgend als hintere Räder 9 bezeichnet werden. Die hinteren Räder 9 liegen auf einer gemeinsamen horizontalen Achse 10. Nahe der Lenkrolle 7 und nahe der hinteren Räder 9 sind bekannte Abstützeinrichtungen 16 vorgesehen, die ortsfest am Fahrgestell 2 angeordnet dazu dienen, den Gepäcktransportwagen 1 während des Transports auf einer Rolltreppe auf jeden Fall auf dem geneigten Abschnitt der Rolltreppe abzustützen. Ausgehend vom hinteren Bereich 3 des Fahrgestelles 2 erstreckt sich eine in Schieberichtung des Gepäcktransportwagens 1 ansteigende Ladefläche 11, auf der insbesondere Handgepäck abstellbar ist. Vorne an der Ladefläche 11 schließt eine vordere, nach oben gerichtete Anschlagvorrichtung 12 an. Eine ebenfalls nach oben gerichtete, jedoch hintere Anschlagvorrichtung 13 ist am hinteren Ende 15 der Ladefläche 11 vorgesehen. Die hintere Anschlagvorrichtung 13 ist um eine nahe der Schiebeeinrichtung 6 gelegenen horizontalen Achse 14 nach vorne und zurück in die gezeichnete Ausgangslage bewegbar. Es kann eine Bremsvorrichtung vorgesehen sein, die von der Schiebeeinrichtung 6 aus nach unten zu den hinteren Rädern 9 führt. Alle bis hierher beschriebenen Details sind in bekannter Weise so gestaltet und angeordnet, dass sich gleiche Gepäcktransportwagen 1 platzsparend ineinander schieben lassen. Da der Gepäcktransportwagen 1 nur für den Transport kleiner Mengen von Gepäck bestimmt ist, somit dementsprechend kleiner ist als der im deutschen Gebrauchsmuster G 85 34 959.3 beschriebene große Gepäcktransportwagen und nur auf zwei aufeinanderfolgenden Trittstufen der Rolltreppe abstützbar sein soll, sind in erfinderischer Weise folgende geometrischen Bedingungen vorgesehen: Der Abstand A, gemessen von der vorderen Anschlagvorrichtung 12 zur hinteren Anschlagvorrichtung 13 ist kleiner als der Abstand B zwischen der Schwenkachse 8 der Lenkrolle 7 und der hinteren Anschlagvorrichtung 13. Ferner beträgt der Abstand C zwischen der Schwenkachse 8 und der gemeinsamen horizontalen Achse 10 der hinteren Räder 9 mindestens 480 mm, höchstens jedoch 560 mm. Schließlich ist die Spurweite D der hinteren Räder 9 mit mindestens 480 mm festgelegt. Bei der Ermittlung der Abstände A bis C gelten die kürzesten messbaren Strecken. Um ein sicheres Abstützen der Gepäcktransportwagen 1 auf dem geneigten Abschnitt einer Rolltreppe zu gewährleisten, ist neben den Abstützeinrichtungen 16 zusätzlich vorgesehen, die Lenkrolle 7 als eine bekannte, auf der Rolltreppe selbsttätig wirkende Bremsrolle zu gestalten. Die so ausgebildete auch unter der Bezeichnung "Fahrsteigrolle" bekannte Lenkrolle 7 fördert ein richtungsgenaues Einfahren in die Rolltreppe. Ferner arretiert sich die Lenkrolle 7 auf der von ihr befahrenen Trittstufe selbsttätig. Der Gepäcktransportwagen 1 kann somit nicht über die vordere Kante einer Trittstufe hinausgefahren werden.

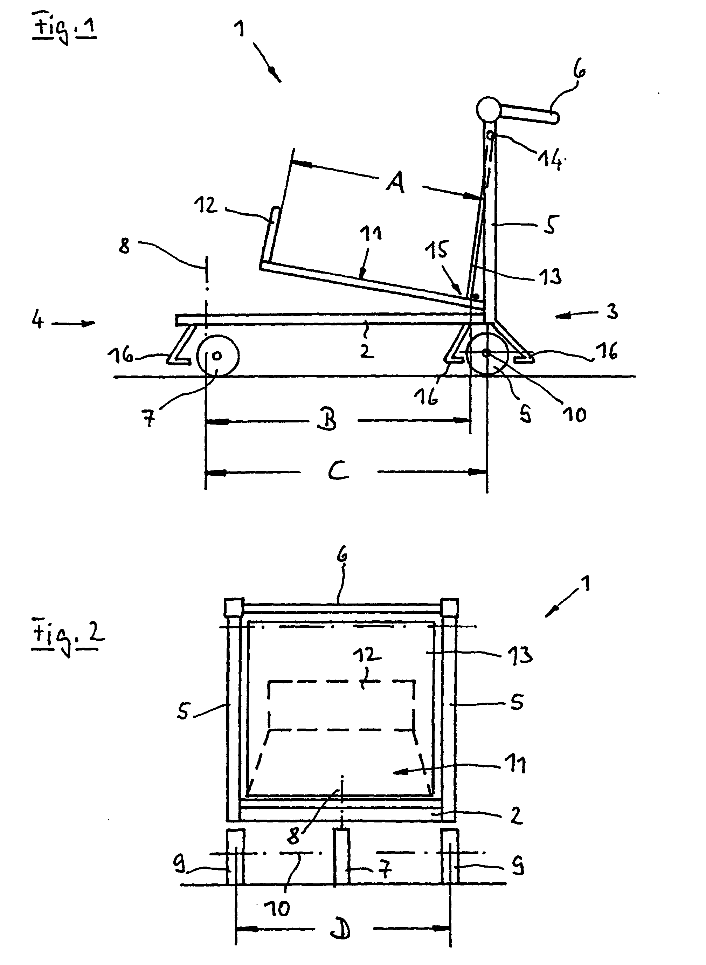

Fig. 2 zeigt den Gepäcktransportwagen 1 von hinten in Schieberichtung. Das Maß D vermittelt die Spurweite D der hinteren Räder 9, gemessen von Mitte Rad 9 zu Mitte Rad 9. Die Spurweite beträgt mindestens 480 mm und kann im Maximalfall etwa 600 mm betragen.

Die Rolltreppen, auf welchen der Gepäcktransportwagen 1 einsetzbar ist, können z.B. so gestaltet sein, wie in der europäischen Norm EN 115 beschrieben.

## Patentansprüche

1. Gepäcktransportwagen (1), der auf einer Rolltreppe beförderbar ist, mit einem Fahrgestell (2), das nahe seiner vorne angeordneten, um eine senkrechte Schwenkachse (8) bewegbaren Lenkrolle (7) und nahe seiner beiden hinteren Räder (9) mit Abstützeinrichtungen (16) ausgestattet ist, die zur Abstützung des Wagens (1) auf dem geneigten Abschnitt der Rolltreppe bestimmt sind, mit einer für das Abstellen von Handgepäck vorgesehenen Abstelleinrichtung, die eine in Schieberichtung des Wagens (1) ansteigende Ladefläche (11) aufweist, die von einer nach oben gerichteten vorderen Anschlagvorrichtung (12) und von einer nach oben gerichteten hinteren Anschlagvorrichtung (13) begrenzt ist und mit einer Schiebeeinrichtung (6), die zum Führen des Wagens (1) dient, **dadurch gekennzeichnet, dass** der Abstand der vorderen Anschlagvorrichtung (12) zur hinteren Anschlagvorrichtung (13) kleiner ist als der Abstand zwischen der Schwenkachse (8) der Lenkrolle (7) und der hinteren Anschlagvorrichtung (13), dass die Lenkrolle (7) als auf der Rolltreppe selbsttätig wirkende Bremsrolle gestaltet ist, dass der Abstand zwischen der Schwenkachse (8) der Lenkrolle (7) und der gemeinsamen horizontalen Achse (10) der hinteren Räder (9) mindestens 480 mm und höchstens 560 mm beträgt und dass die Spurweite der hinteren Räder (9) mit mindestens 480 mm festgelegt ist.

2. Gepäcktransportwagen nach Anspruch 1, **dadurch gekennzeichnet, dass** eine Bremsvorrichtung vorgesehen ist, die von der Schiebeeinrichtung (6) aus zu den hinteren Rädern geführt ist.

## Claims

1. A luggage trolley (1) usable on an escalator, comprising a wheel frame (2) which, in the vicinity of its front caster (7), which is movable about a vertical swivel axis (8), and in the vicinity of its two rear wheels (9), is provided with supporting devices (16) intended to support the trolley (1) on the inclined portion of the escalator, comprising a depositing arrangement on which hand luggage may be deposited and which has a loading surface (11) rising in the pushing direction of the trolley (1) and bounded by an upwardly extending front stop device (12) and an upwardly extending rear stop device (13), and comprising a pushing arrangement (6) which serves to steer the trolley (1), **characterised in that** the distance between the front stop device (12) and the rear stop device (13) is smaller than the distance between the swivel axis (8) of the caster (7) and the rear stop device (13), **in that** the caster (7) is constructed as a braking roller which is automatically effective on the escalator, **in that** the distance between the swivel axis (8) of the caster (7) and the common horizontal axis (10) of the rear wheels (9) is at least 480 mm and at most 560 mm, and **in that** the gauge of the rear wheels (9) is fixed at at least 480 mm.

2. A trolley according to claim 1, **characterised in that** a braking device is provided which extends from the pushing arrangement (6) to the rear wheels.

## Revendications

1. Chariot de transport de bagages (1) pouvant être transporté sur un escalier roulant, comprenant un châssis (2) équipé de dispositifs d'appui (16) à proximité de sa roue de guidage (7) disposée à l'avant et mobile autour d'un axe de pivotement vertical (8), et à proximité de ses deux roues arrière (9), lesquels sont destinés à supporter le chariot (1) sur la partie inclinée de l'escalier roulant, comprenant également un dispositif de pose pour y déposer des bagages à main, qui comporte une surface de chargement (11) remontant dans le sens d'avance du chariot (1), laquelle est délimitée par un dispositif de butée avant (12) dirigé vers le haut et par un dispositif de butée arrière (13) dirigé vers le haut, et comprenant enfin un dispositif de poussée (6) pour guider le chariot (1), **caractérisé en ce que** l'écart entre le dispositif de butée avant (12) et le dispositif de butée arrière (13) est inférieur à l'écart entre l'axe de pivotement (8) de la roue de guidage (7) et le dispositif de butée arrière (13), **en ce que** la roue de guidage (7) est conçue en tant que roue de freinage entrant automatiquement en action sur l'escalier roulant, **en ce que** l'écart entre l'axe de pivotement (8) de la roue de guidage (7) et l'axe horizontal (10) commun des roues arrière (9) est de 480 mm au minimum et de 560 mm au maximum, et **en ce que** l'empattement des roues arrière (9) est fixé à au moins 480 mm.

2. Chariot de transport de bagages selon la revendication 1, **caractérisé en ce qu'**un dispositif de freinage est prévu, qui part du dispositif de poussée (6) et qui va jusqu'aux roues arrière.
